Europäisches Patentamt

European Patent Office

Office européen des brevets

(19)

(11) Veröffentlichungsnummer: **0 253 220**
**B1**

(12) **EUROPÄISCHE PATENTSCHRIFT**

(45) Veröffentlichungstag der Patentschrift:
**19.09.90**

(51) Int. Cl.⁵: **F16L 11/11**

(21) Anmeldenummer: **87109537.8**

(22) Anmeldetag: **02.07.87**

(54) Biegbarer Schlauch mit zueinander parallelen, ringförmigen Wellen und Axialabstützung.

(30) Priorität: **14.07.86 DE 3623702**

(43) Veröffentlichungstag der Anmeldung:
**20.01.88 Patentblatt 88/3**

(45) Bekanntmachung des Hinweises auf die Patenterteilung:
**19.09.90 Patentblatt 90/38**

(84) Benannte Vertragsstaaten:
**AT BE CH FR GB IT LI NL**

(56) Entgegenhaltungen:
**WO-A-86/04660**
**DE-A- 2 653 192**
**DE-C- 835 379**
**DE-U- 8 518 194**
**US-A- 2 894 535**
**US-A- 3 006 662**

(73) Patentinhaber: **Witzenmann GmbH**
**Metallschlauch-Fabrik Pforzheim, Östliche**
**Karl-Friedrich-Strasse 134, D-7530 Pforzheim(DE)**

(72) Erfinder: **Quick, Klaus, Dipl.-Ing., Grosser**
**Lückenweg 59, D-7530 Pforzheim(DE)**
Erfinder: **Gropp, Reinhard, Dipl.-Ing., in der Laier 17,**
**D-7540 Neuenbürg-Arnbach(DE)**

(74) Vertreter: **Lemcke, Rupert, Dipl.-Ing. et al,**
**Patentanwälte Dipl.-Ing. R. Lemcke Dr.-Ing. H.J.**
**Brommer Bismarckstrasse 16 Postfach 4026,**
**D-7500 Karlsruhe 1(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft einen biegbaren Schlauch mit zueinander parallelen, ringförmigen Wellen, endständigen Anschlußteilen und diese gegen axiale Abstandsänderung haltenden, mit den Anschlußteilen in Zug- und/oder Druckrichtung fest verbundenen Längsstützmitteln in Form wenigstens eines flexiblen, sich im wesentlichen parallel zum Schlauch erstreckenden Seiles, wobei die Relativlage zwischen Schlauch und Seil durch das Seil erfassende, in Abständen über die Schlauchlänge verteilt angeordnete Abstandhalter gegeben und der Schlauch in Radialrichtung durch das Seil geführt und abgestützt ist.

Dieser Gegenstand ist in der WO-A 8604660 (Veröffentlichungsdatum 14.8.86) vorbeschrieben. Soweit hier im Zusammenhang mit den Wellen des Schlauches der Begriff "ringförmig" verwendet ist, ist darunter nicht nur eine kreisringförmige Ausbildung zu verstehen, sondern ebenso beispielsweise ein Schlauch mit ovalem oder ähnlichem Querschnitt. Soweit der Begriff "flexibles Seil" auftritt, ist dieser aus Gründen der Vereinfachung stellvertretend gewählt für alle hier in Frage kommenden, in ihrer Längsrichtung eine Kraftaufnahme ermöglichenden Teile. So kann das Seil ein Draht- oder Faserbündel sein, eine biegbare Stange, ein Band oder Bandpaket, eine Gliederkette, eine gelenkige Aneinanderreihung von stabförmigen Kettengliedern, die auch für sich selbst biegesteif sein können, etc.

Die gattungsgemäßen Schläuche, die auch als Bälge bezeichnet werden, bestehen in der Regel aus Metall. Je nach Anwendungsfall kommen jedoch auch andere Materialien, insbesondere Kunststoff, in Frage. Die Schläuche dienen üblicherweise der biegbaren Verbindung zweier medienführender Teile, an die sie angeschlossen sind. Wenn das Medium einen Überdruck aufweist, versucht der Schlauch bekanntermaßen, seine Länge zu vergrößern, so daß es erforderlich ist, durch zusätzliche Mittel, die hier im wesentlichen durch ein oder mehrere Seile gebildet sind, den axialen Längenabstand der Schlauchanschlußteile zu halten und den Schlauch gegen Ausknicken bzw. seitliches Ausbrechen zu stützen.

Die gattungsgemäße Konstruktion löst die Aufgabe, einen Schlauch der genannten Art so abzustützen, daß er einer tribologischen Beanspruchung nicht mehr unterliegt und damit ohne verschleißbedingte Beeinträchtigung durch andere Teile hinsichtlich der aufzunehmenden Belastung, insbesondere der Biegewechselbeanspruchung seine eigene volle Lebensdauer erreichen kann. Dazu sind das Seil oder die Seile in der Regel in der neutralen Biegeebene des Schlauches angeordnet, so daß sich keine Relativbewegungen gegenüber dem Schlauch weder in Längsrichtung noch in Umfangsrichtung ergeben, wobei die Abstandhalter dazu dienen, das Seil oder die Seile in der genannten Relativlage zum Schlauch zu halten. Dazu sind die Abstandhalter im wesentlichen als in die Schlauchwellen eingesetzte oder auf diese aufgesetzte steife oder auch schlaffe Ringe ausgebildet, die in geeigneter, unterschiedlicher Weise das Seil erfassen, umschlingen etc.

Dadurch, daß der gattungsgemäße Schlauch in einer von tribologischen Beanspruchungen freien Form geführt und abgestützt ist, ergibt sich nun eine gewisse Anfälligkeit gegen Schwingungen, die von den anschließenden Bauteilen ausgehen können, aber auch durch bestimmte Strömungszustände induziert sein können, wodurch insbesondere bei Erregung des Schlauches im Takte seiner Eigenfrequenz unangenehme oder gar unzulässig große Schwingungsamplituden auftreten können, durch die nicht nur eine Beeinträchtigung der Lebensdauer, sondern auch das Entstehen unangenehmer Begleiterscheinungen in Form von Klappergeräuschen etc. gegeben sein kann.

Aufgabe der Erfindung ist es daher, einen Schlauch der eingangs genannten Art derart weiter auszubilden, daß bei Aufrechterhaltung der von tribologischen Beanspruchungen freien Führung und Abstützung des Schlauches in konstruktiv einfacher und kostengünstiger Weise auftretende Schwingungen gedämpft bzw. hinsichtlich ihrer Weiterleitung gehindert werden.

Diese Aufgabe ist erfindungsgemäß dadurch gelöst, daß zwischen zumindest zwei benachbarten Abstandhaltern wenigstens ein bezüglich ihrer gegenseitigen Beweglichkeit wirksames Dämpfungsglied außerhalb der neutralen Biegeebene des Schlauches angeordnet ist.

Durch diese erfindungsgemäße Maßnahme ist in einfacher Weise sichergestellt, daß benachbarte Abstandhalter, die außerhalb der neutralen Biegeebene vom Schlauch ausgeführte Schwingungsbewegungen mitmachen würden, dort hinsichtlich ihrer gegenseitigen freien Beweglichkeit im Sinne einer Dämpfung behindert sind. Dabei kann es je nach den Umständen des Einzelfalles genügen, über die Schlauchlänge gesehen an nur einer Stelle, an der sich Schwingungen besonders auswirken, die Dämpfungsmaßnahme zu ergreifen. In der Regel wird es jedoch zweckmäßig sein, sämtliche Abstandhalter eines Schlauches hinsichtlich ihrer gegenseitigen Beweglichkeit zu dämpfen, was, wie sich nachfolgend noch im einzelnen ergeben wird, durch einfache Umgestaltung der Abstandhalter oder kostengünstige Zusatzteile in montagefreundlicher Weise möglich ist. Die Erfindung läßt sich gleichermaßen sowohl bei außerhalb als auch bei innerhalb des Schlauches angeordnetem Seil oder Seilen anwenden.

Sind zwischen zwei benachbarten Abstandhaltern mehrere Dämpfungsglieder angeordnet, so ist es zweckmäßig, diese symmetrisch über den Schlauchumfang verteilt anzuordnen.

Nach der Erfindung ist es vorteilhaft, daß das Dämpfungsglied eine am einen Abstandhalter gebildete, mit dem benachbarten Abstandhalter wenigstens mittelbar in Berührung stehende Reibfläche ist. Eine solche Reibfläche beeinträchtigt die normale, gewünschte Beweglichkeit des Schlauches praktisch nicht, führt jedoch bei Schwingungen zu deren Dämpfung bzw. verhindert deren Weiterleitung oder gar deren Aufschaukeln.

Im Zusammenhang mit einer solchen Reibfläche ist es zweckmäßig, daß bei Abstandhaltern in Form von in die Schlauchwellen eingesetzten oder auf diese aufgesetzten Ringen oder Ringsegmenten das Dämpfungsglied als aus dem Ringmaterial geformte, ggf. über den gesamten Schlauchumfang umlaufende, gegenüber dem Schlauch berührungslose und mit dem benachbarten Ring oder Ringsegment in Reibberührung stehende Fahne ausgebildet ist, wobei solche sich im wesentlichen tangential oder radial zum Schlauch und in gleicher Richtung erstreckenden Fahnen benachbarter Ringe oder Ringsegmente schuppenförmig ineinandergeschachtelt sein können oder sich im wesentlichen radial und in gleicher Richtung erstreckende Fahnen benachbarter Ringe in Längsrichtung des Schlauches alternierend aneinanderliegen können. Hier ist also die Bildung der Reibflächen beispielsweise bei aus Blech bestehenden Ringen oder Ringsegmenten in einfacher Form durch Abbiegen eines Blechstückes möglich, das ggf. mit einem dazu passenden Blechstück des benachbarten Ringes in Reibberührung tritt. Hervorzuheben ist, daß die Fahnen gegenüber dem Schlauch berührungsfrei sind, durch sie also eine tribologische Beanspruchung des Schlauches nicht möglich ist.

Eine andere Gestaltung der Reibflächen kann darin bestehen, daß bei Abstandhaltern in Form von in die Schlauchwellen eingesetzten oder auf diese auf gesetzten Ringen oder Ringsegmenten das Dämpfungsglied ein auf das Ringmaterial aufgesetztes oder zwischen Ringmaterial und Schlauch eingesetztes Bauteil ist und daß das Bauteil mit einer in Axialrichtung des Schlauches weisenden, gegenüber dem Schlauch berührungsfreien, ggf. über den gesamten Schlauchumfang umlaufenden Fahne wenigstens mittelbar mit dem benachbarten Ring oder Ringsegment in Reibberührung steht. Dabei kann das Bauteil nach Art einer Balgwelle ausgebildet und von außen oder von innen auf den Ring bzw. das Ringsegment aufgesetzt sein, wobei ggf. zur Herstellung einer unverlierbaren Halterung das Bauteil beispielsweise durch eine Schnappverbindung mit dem Ring oder Ringsegment verrastet sein kann.

Eine wiederum andere Möglichkeit im Rahmen des Vorstehenden besteht darin, daß bei Abstandhaltern in Form von in die Schlauchwellen eingesetzten oder auf diese aufgesetzten Ringen oder Ringsegmenten in Längsrichtung des Schlauches gesehen jeder zweite Abstandhalter ein Paar von schlauchparallelenund gegenüber dem Schlauch berührungsfreien Blattfedern ggf. lösbar, aber unverlierbar trägt, deren beidseits des Abstandhalters vorstehende Zungen ggf. aufeinander zu gebogen sind, daß die anderen Abstandhalter beidseits mit den Blattfedern gepaarte Stege aufweisen und daß die Stegenden in Axialrichtung des Schlauches verschiebbar zwischen das jeweils benachbarte Paar von dabei federn voneinander entfernten Blattfederzungen ragt.

Ausgehend vom erfindungsgemäßen Lösungsprinzip, kann es jedoch auch vorteilhaft sein, daß das Dämpfungsglied ein zwischen je zwei benachbarte Abstandhalter gegenüber dem Schlauch berührungsfrei ggf. unter Vorspannung eingesetztes, an beiden Abstandhaltern in Axialrichtung des Schlauches in Anlage befindliches Kissen mit gedämpft federnden Eigenschaften ist und daß das Kissen durch die Abstandhalter in Radial- und Umfangsrichtung des Schlauches gehaltert ist, wobei diese Halterung durch in die Abstandhalter eingesetzte und in Vertiefungen der Kissen ragende Stifte gegeben sein kann. Was die Kissen betrifft, so können diese aus Fasermaterial oder aus einem Drahtgestricke oder - geflecht gepreßt sein, dessen Material je nach den Umständen des Einsatzfalles gewählt werden kann.

Hier ist also ein Lösungsweg beschritten, durch den benachbarte Abstandhalter unmittelbar gegeneinander gepuffert werden, wobei über den Grad der Verpressung der Kissen und/oder deren Material die gewünschte Dämpfungswirkung und gegenseitige Beweglichkeit der Abstandhalter bestimmbar ist in Verbindung mit der Paarung zwischen Kissen und beispielsweise in diese ragenden Stiften.

Ebenfalls ausgehend vom erfindungsgemäßen Lösungsprinzip, kann eine weitere Bauform darin bestehen, daß das Dämpfungsglied durch ein in einen Abstandhalter gegenüber dem Schlauch berührungsfrei eingesetztes, in Axialrichtung des Schlauches weisendes Rohrstück und einen in dieses praktisch spielfrei ragenden Stift des benachbarten Abstandhalters gebildet ist, wobei das Rohrstück und/oder der Stift zweckmäßigerweise aus Kunststoff bestehen können. Hier werden also kleine Zylinder-Kolben-Einheiten gebildet, die neben der Reibungsdämpfung eine pneumatische Dämpfungswirkung haben.

Schließlich kann im Rahmen der Erfindung aber auch vorgesehen werden, daß die aus Seil und Abstandhaltern gebildete Stütz- und Führungskonstruktion in gegenüber dem Schlauch berührungsfreier Weise durch ein Geflecht, ein Maschennetz oder eine überkreuz gewickelte Bandage ummantelt ist. Hier ergibt sich die Dämpfungswirkung durch Reibung der Abstandhalter gegenüber der Ummantelung, die jedoch eine tribologische Beanspruchung für den Schlauch nicht bedeutet. Gleichzeitig hat dieser Lösungsweg aber auch den Vorzug, den Schlauch und dessen Stützkonstruktion gegenüber äußeren Einflüssen beispielsweise in Form von Verschmutzung zu schützen. Besonders hervorzuheben ist aber vor allem die Tatsache, daß eine solche Ummantelung insbesondere dann, wenn sie außerdem an den Anschlußteilen des Schlauches befestigt ist, ein den Schlauch wenigstens vorübergehend haltendes Sicherheitselement für den Fall abgibt, daß beispielsweise gegen Ende der Standzeit das Seil vor dem Schlauch zu Bruch geht und somit eine Axialabstützung des Schlauches durch das Seil fortfällt.

Weitere erfindungswesentliche Merkmale und Einzelheiten ergeben sich aus der nachfolgenden Beschreibung von Ausführungsformen in Verbindung mit der Zeichnung. In der Zeichnung zeigen:

Fig. 1 die teilweise geschnittene Seiten- und Axialansicht eines vorbeschriebenen Schlauches mit äußerer Abstützung;

Fig. 2 die teilweise geschnittene Seiten- und Axialansicht eines vorbekannten Schlauches mit innerer Abstützung;

Fig. 3 bis 5 und 7 bis 9 die zumindest teilweise geschnittene Seitenansicht eines Schlauches mit Reibflächendämpfung der Abstandhalter;

Fig. 6 eine Einzelheit aus Fig. 5 in perspektivischer Ansicht;

Fig. 10 die Seitenansicht eines Schlauches mit Kissendämpfung der Abstandhalter im Schnitt und

Fig. 11 die Seitenansicht eines Schlauches mit pneumatischer Dämpfung der Abstandhalter im Schnitt.

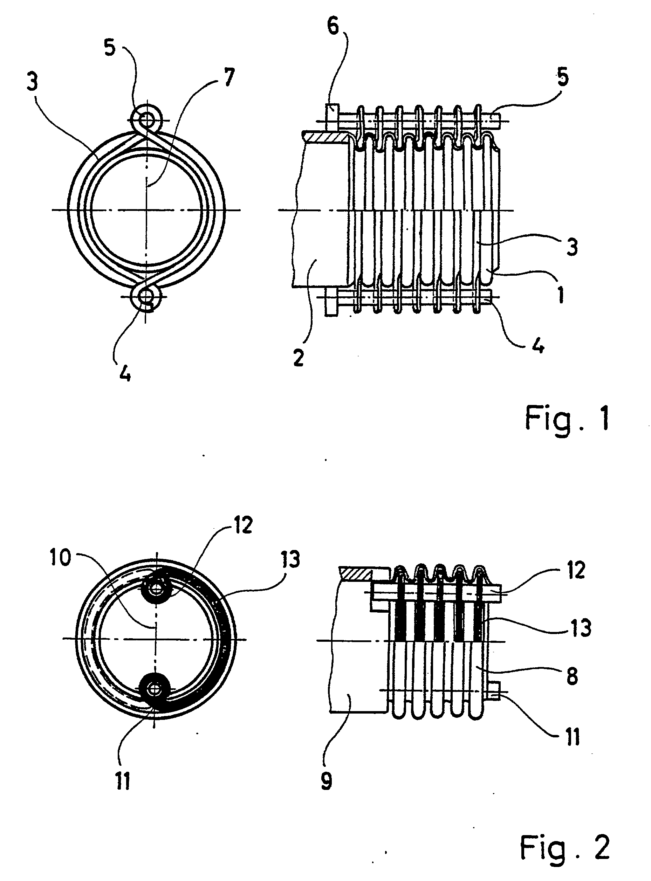

Fig. 1 zeigt rechts in teilweiser Schnittdarstellung die Seitenansicht eines Wellschlauches 1 gemäß der eingangs genannten deutschen Patentanmeldung, der von einem Anschlußteil 2 ausgeht. Ein ebensolches Anschlußteil muß man sich auf der rechten Seite am Schlauchende vorstellen, wobei dort die Konstruktion im übrigen genau der Darstellung des linken Schlauchendes entspricht.

In die Wellentäler des Ringwellschlauches 1 sind Abstandhalter 3 eingesetzt, die den Schlauch umschlingen, und ebenso zwei auf gegenüberliegenden Seiten des Schlauches zu diesem parallel verlaufende Seile 4 und 5, die bei 6 an den Anschlußteilen 2 des Schlauches 1 befestigt sind.

Die Seile 4 und 5 liegen in der neutralen Biegeebene des Schlauches, die bei dessen in Fig. 1 linker Ansicht mit der Ziffer 7 versehen ist. Diese Anordnung in der neutralen Beigeebene bedeutet, daß bei einer Biegung des Schlauches entlang dieser Ebene die Seile 4 und 5 in geometrischer Hinsicht einer reinen Biegebeanspruchung ausgesetzt sind, indem die einzelnen Schlauchquerschnitte um ihre durch die Ziffer 7 bezeichnete Achse schwenken. Damit halten die Seile 4 und 5 die Anschlußteile 2 des Schlauches bezüglich ihrer Achse in einem konstanten, vorgegebenen Abstand.

Da in der neutralen Biegeebene auch die Länge des Schlauches 1 konstant bleibt, kann sich reine reibende Relativbewegung zwischen Schlauch 1 und Seilen 4 und 5 ergeben, so daß es entsprechend hier auch nicht zu einer Reibungsbeanspruchung und zu Verschleiß kommen kann unabhängig davon, ob zwischen Schlauch 1 und Seilen 4 und 5 Berührung gegeben ist oder nicht.

Wie Fig. 1 zeigt, ist der Abstandhalter 3 durch einen entsprechend gebogenen Draht mit Kreisquerschnitt gebildet, dessen freie Enden das Seil 4 beidseits hinterhaken, womit die Verbindung zwischen Schlauch 1, Seilen 4 und 5 sowie Abstandhalter 3 unverlierbar geschlossen ist. Selbstverständlich sind anstelle der in Fig. 1 gezeigten Formen zahlreiche andere Ausbildungen des Abstandhalters 3 möglich, vorausgesetzt, daß die am Beispiel gemäß Fig. 1 erläuterte Funktion erfüllt wird. Dies geschieht beispielsweise auch durch halbkreisförmige, scheibenartig ausgebildete Segmente, die die Seile 4 und 5 an endständigen Bohrungen durchqueren und die abwechselnd von der einen oder anderen Seite des Schlauches in benachbarte Wellentäler eingesetzt sind. Es ist also nicht erforderlich, daß in jedem Wellental ein vollständig umlaufender Abstandhalter vorhanden ist, wenn dies auch je nach den Umständen des Einzelfalles zweckmäßig sein kann.

Was die Seile 4 und 5 betrifft, so können diese, wie dargestellt, glatte Stäbe oder Draht- bzw. Faserbündel sein. Es besteht jedoch auch die Möglichkeit, hier Bänder oder Bandpakete zu verwenden oder aber auch Ketten aus gelenkig aneinandergereihten Gliedern, die selbst durchaus als biegesteife Elemente ausgebildet sein können. Die so geschilderten Variationsmöglichkeiten betreffen grundsätzlich auch alle anhand der weiteren Figuren beschriebenen Ausführungsbeispiele, weshalb dort auf diese Frage nicht noch einmal eingegangen wird.

Fig. 2 zeigt im Gegensatz zu Fig. 1 eine Axialabstützung eines Wellschlauches 8 der bereits vorbeschriebenen Art, die in dessen Innerem angeordnet ist. Auch hier weist der Wellschlauch 8 an seinen Enden Anschlußteile 9 auf, an denen in der neutralen Biegeebene 10 zwei einander gegenüberliegen angeordnete Seile 11, 12 befestigt sind.

Die Seile 11 und 12 werden durch Abstandhalter 13 geführt, die halbkreisförmig ausgebildet und von innen in die Wellentäler des Ringwellschlauches 8 eingesetzt sind. Dabei ist hier die Anordnung so getroffen, daß in entgegengesetzter Richtung umlaufende Abstandhalter 13 um ein Wellental versetzt angeordnet sind. Selbstverständlich können die Abstände auch größer gewählt werden, wenn dies für eine ordentliche Führungs des Schlauches 8 gegenüber den Seilen 11 und 12 ausreichend ist, was im übrigen auch für die in Fig. 1 dargestellte Ausführungsform gilt.

Wie ersichtlich, können die Seile 11 und 12 in Anlage an den Innenkrempen des Wellschlauches 8 sein, was jedoch zu keiner reibenden Relativbewegung führt, da die Seile 11 und 12 in der neutralen Biegeebene 10 liegen. Zweckmäßigerweise kann jedoch vorgesehen sein, daß die Seile 11 und 12 gegenüber der Innenkontur des Schlauches 8 einen geringfügigen Abstand haben.

Anhand der Fig. 2 kann man sich im übrigen auch leicht vorstellen, daß bei entsprechender Ausbildung der Abstandhalter nur ein Seil entlang der Schlauchachse angeordnet ist, womit die Abhängigkeit von einer bestimmten Biegeebene entfällt, da das so angeordnete Seil immer in der Biegeebene liegt.

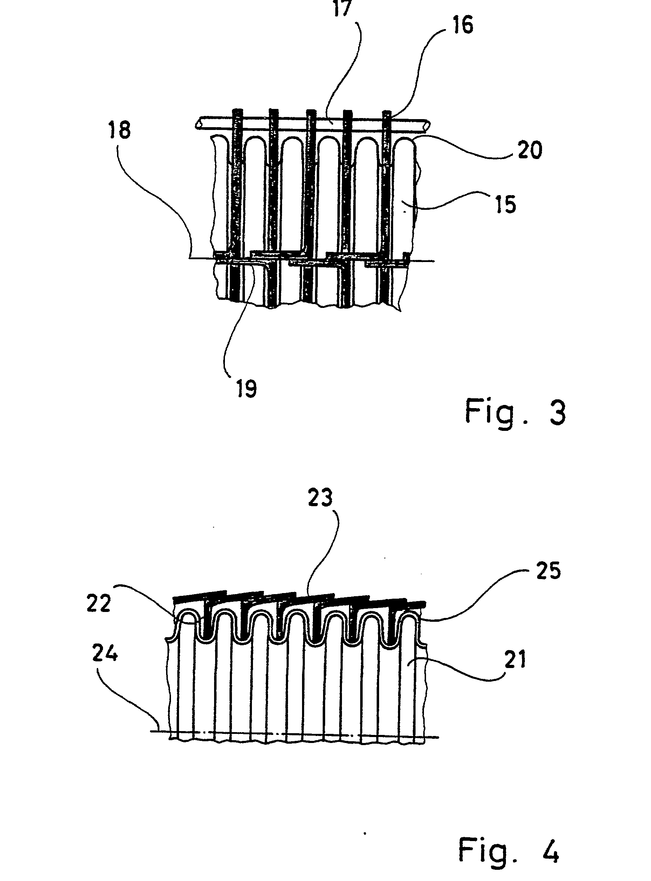

Hiervon ausgehend, zeigt nun Fig. 3 eine erste Form der neuen Konstruktion in der der Fig. 1 entsprechenden Seitenansicht. Hier sind in die Wellentäler eines Schlauches 15 umlaufende Ringe oder Ringsegmente 16 eingesetzt, die auf gegenüberliegenden Seiten und in der Biegeebene des Schlauches Durchtrittsborhungen für Seile aufweisen, von denen hier nur das Seil 17 dargestellt ist. Ein entsprechendes Seil muß man sich auf der gegenüberliegenden Seite der Schlauchachse 18 vorstellen.

Die durch die Ringe oder Ringsegmente 16 gebildeten Abstandhalter weisen sich in eine Schlauchrichtung erstreckende Fahnen 19 auf, die bezüglich der Längsrichtung des Schlauches alternierend aneinanderliegen und sich so in gegenseitigem Reibkontakt befinden. Die Fahnen 19 sind in Radialrichtung gegenüber dem Schlauch 15 so versetzt, daß sie keine Berührung mit den nach außen gerichteten Wellenbergen 20 des Schlauches haben, diese folglich keiner Reibbeanspruchung aussetzten. Andererseits sind die Fahnen 19 ersichtlich außerhalb der in der Zeichenebene liegenden Biegeebene des Schlauches angeordnet, also dort, wo bei Biegebewegungen des Schlauches eine Abstandänderung zwischen benachbarten Ringen oder Ringsegmenten 16 stattfindet, mit der gleichzeitig eine Reibbewegung zwischen aneinanderliegenden Fahnen 19 einhergeht, durch die zur Dämpfung von Schwingungen die Beweglichkeit benachbarter Ringe oder Ringsegmente 16 eingeschränkt ist.

Während gemäß Fig. 3 die Fahnen 19 die Form im wesentlichen radial zur Schlauchachse gerichteter Stege haben, sind gemäß Fig. 4 bei einem Schlauch 21 Ringe oder Ringsegmente 22 vorgesehen mit in Längsrichtung des Schlauches sich erstreckenden Fahnen 23, die in der dargestellten Weise schuppenförmig ineinandergeschachtelt sind und so miteinander in reibender Berührung stehen. Die Fahnen 23 können kurze, zweckmäßig symmetrisch über den Schlauchumfang verteilt angeordnete Stücke sein, die aus dem Material der Ringe oder Ringsegmente 22 abgebogen sind, sie können jedoch auch kontinuierlich umlaufend ausgebildet sein.

Ein Seil ist in Fig. 4 nicht dargestellt. Bei Verwendung von zwei Seilen liegen diese außerhalb des Schlauches vor und hinter der die Schlauchachse 24 darstellenden Linie.

Auch bei der Ausführungsform gemäß Fig. 4 haben die Fahnen 23 keine Berührung mit den nach außen gerichteten Wellenbergen 25 des Schlauches.

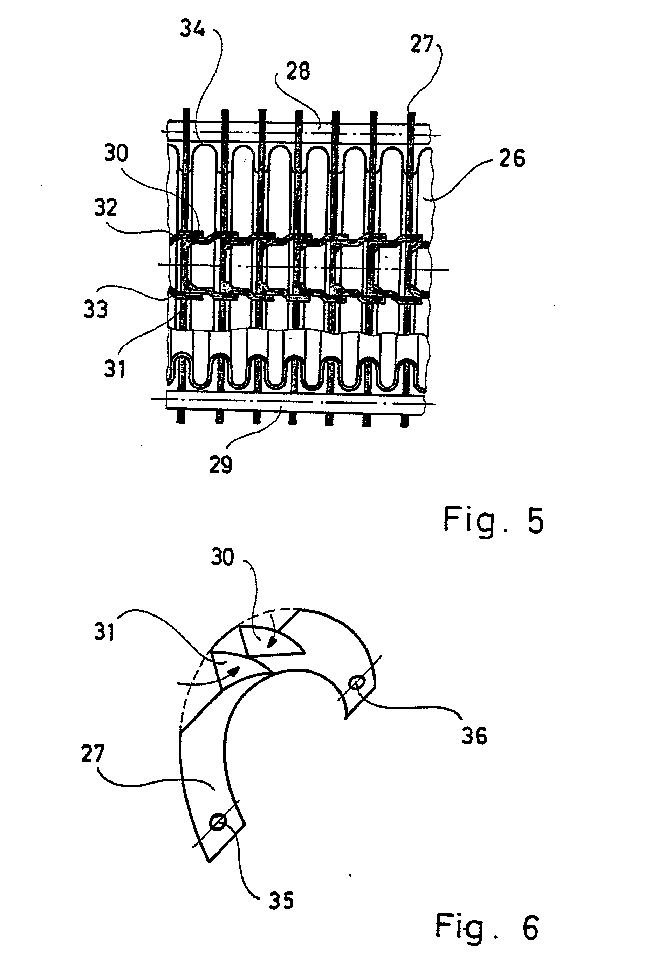

Eine dem Gegenstand der Fig. 3 ähnliche Ausführungsform zeigt Fig. 5 in teilweise geschnittener Seitenansicht. Hier sind in die Wellentäler eines Schlauches 26 Ringe oder Ringsegmente 27 eingesetzt, die von beidseits des Schlauches in der neutralen Biegeebene liegenden Seilen 28 und 29 durchquert werden. Aus dem Material der Ringe oder Ringsegmente 27 sind in gleichbleibende Längsrichtung des Schlauches 26 gerichtete Fahnen 30, 31 abgebogen, die vermöge einer in ihrem Verlauf gebildeten Kröpfung 32, 33 bezüglich benachbarter Ringe oder Ringsegmente 27 schuppenförmig ineinandergreifen und damit in gegenseitigem Reibkontakt stehen. Auch diese Fahnen 30, 31 haben einen solchen Radialabstand gegenüber dem Schlauch 26, daß sie nicht in Berührung mit dessen nach außen gerichteten Wellenbergen 34 kommen können.

Da hier die Fahnen 30, 31 an den Ringen oder Ringsegmenten 27 paarweise und kräftenmäßig in entgegengesetzter Umfangsrichtung angeordnet und wirksam sind, hat diese Konstruktion den Vorzug, kraftmäßig in Umfangsrichtung neutralisiert zu sein.

Fig. 6 zeigt in perspektivischer Darstellung ein Ringsegment 27 der beschriebenen Art, an dem die Bohrungen 35, 36 für die Seile 28, 29 ersichtlich sind und außerdem die Art, wie die Fahnen 30, 31 aus dem beispielsweise aus Blech bestehenden Ringsegment 27 ausgeschnitten und abgebogen sind.

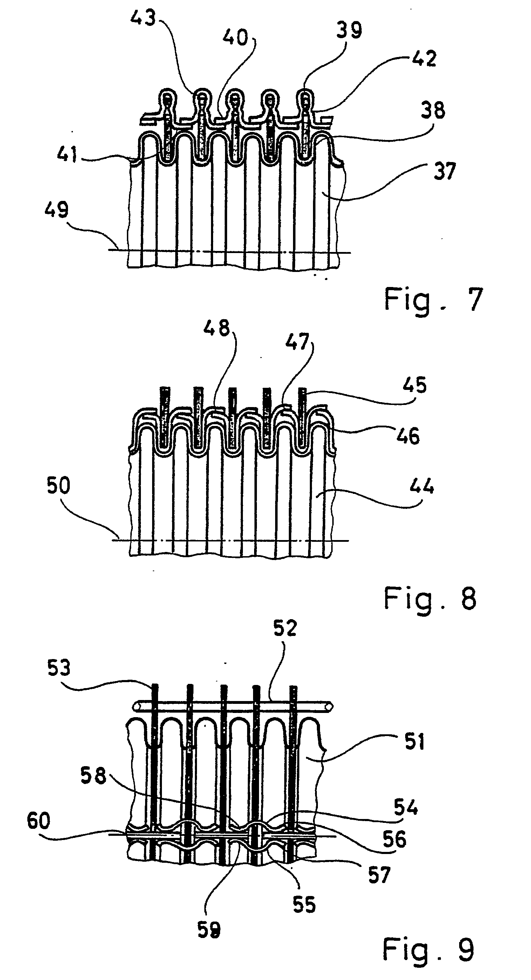

Während die Fig. 3 bis 6 Beispiele zeigen, gemäß denen Dämpfungsglieder in form von Fahnen aus dem Material der Abstandhalter selbst gebildet wurden, veranschaulicht Fig. 7 in geschnittener Seitenansicht eine Bauform, gemäß der auf die in den Wellentälern eines Schlauches 37 sitzenden Ringe oder Ringsegmente 38 von außen nach Art einer Balgwelle gebogene Dämpfungsglieder 39 aufgesetzt sind, die über axial gerichtete Fahnen 40, 41 in gegenseitiger Reibberührung stehen, wobei im vorliegenden Falle die Fahnen im wesentlichen tangential zum Schlauch 37 angeordnet sind. Die Dämpfungsglieder 39 können wieder zweckmäßigerweise symmetrisch über den Schlauchumfang verteilt angeordnete Einzelteile sein. Ebenso ist jedoch auch eine geschlossen umlaufende Ausbildung denkbar. Insbesondere für aus Einzelteilen bestehende Dämpfungsglieder 39 ist es zweckmäßig, diese über eine Einschnürung 42 mit einer korrespondierenden Bohrung 43 der Ringe oder Ringsegmente 38 in rastenden Eingriff zu bringen.

Fig. 8 zeigt eine mit Fig. 7 vergleichbare Bauform bei einem Schlauch 44 und Abstandhaltern in Form von Ringen oder Ringsegmenten 45, bei der jedoch die nach Art einer Balgwelle ausgebildeten Dämpfungsglieder 46 von innen auf die Ringe oder Ringsegmente 45 aufgesetzt sind und sich so zwischen Schlauch 44 und Ringen oder Ringsegmenten 45 befinden. Im übrigen greifen aber auch diese Dämpfungsglieder 46 mit axial gerichteten Fahnen 47, 48 reibend ineinander, ohne mit diesen Fahnen gleichzeitig mit dem Schlauch 44 in Berührung zu stehen. Was die wellenförmige Gestaltung der Dämpfungsglieder 46 betrifft, so versteht es sich von selbst, daß diese soviel Freiheit gegenüber den Wellenflanken des Schlauches 44 aufweist, daß die gewünschte Beweglichkeit des Schlauches nicht beeinträchtigt wird.

Für die Fig. 7 und 8 gilt entsprechend der Bermerkung zu Fig. 4 gleichermaßen, daß man sich die nicht dargestellten Seile außerhalb des Schlauches vor und hinter der die Schlauchachse bildenden Linie 49 bzw. 50 vorstellen muß.

Bei der Ausführungsform gemäß Fig. 9 sind in die Wellentäler eines Schlauches 51 beidseits des Schlauches in der Biegeebene von Seilen 52 durchquerte Abstandhalter in Form von Ringen oder Ringsegmenten 53 eingesetzt, bei denen in jeden zweiten Abstandhalter ein Paar von Blattfedern 54, 55 unverlierbar eingesetzt ist, deren beidseits des Abstandhalters vorstehende Zungen 56 bis 59 aufeinander zu gebogen sind. In die dazwischen liegenden Abstandhalter sind Stege 60 eingesetzt, deren beidseits in Axialrichtung vorstehende Enden zwischen das jeweils benachbarte Paar von Blattfederzungen 56, 57 bzw. 58, 59 ragen, wobei die Zungen federn auseinandergebogen werden und sich danach in reibschlüssiger Anlage an den Stegen 60 befinden. Selbstverständlich sind auch hier wieder sowohl die Blattfedern als auch die Stege in Radialrichtung des Schlauches 51 so angeordnet, daß die keine Berührung mit dem Schlauch haben.

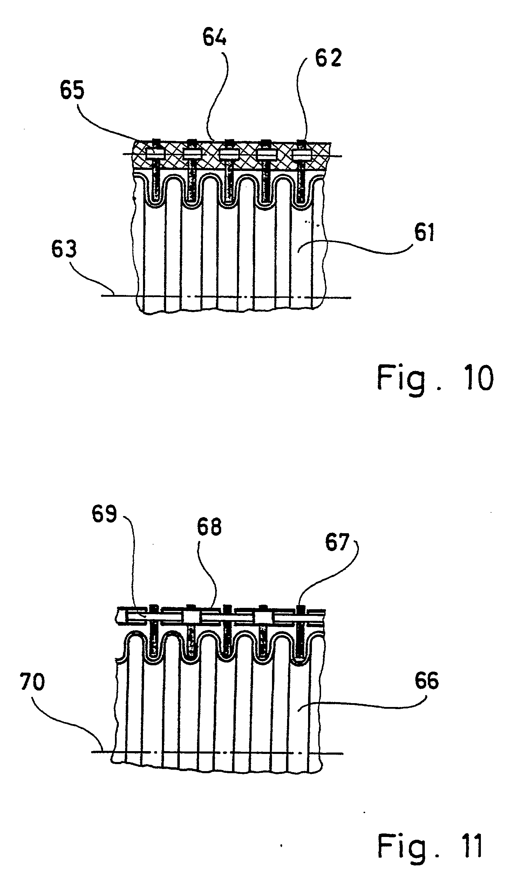

Fig. 10 zeigt eine von den bisherigen Beispielen grundsätzlich abweichende Bauform. Übereinstimmung besteht zunächst darin, daß wider in die Wellentäler eines Schlauches 61 Abstandhalter in Form von Ringen oder Ringsegmenten 62 eingesetzt sind. Diese sind jedoch außerhalb der durch die gleichzeitig die Schlauchachse darstellende Linie 63 gebildeten Biegeebene gegeneinander durch zwischengesetzte Kissen 64 gepuffert, die Einzelkissen oder ringförmig umlaufende Kissen sein können, gegenüber dem Schlauch 61 berührungsfrei angeordnet sind und zur Herstellung gedämpft federnder Eigenschaften beispielsweise aus einem Gestricke aus Metall oder Kunststoff gepreßt sind. Damit die Kissen 64 ihre Position zwischen benachbarten Abstandhaltern 62 beibehalten, sind in Bohrungen der Abstandhalter Bolzen oder Stege 65 eingesetzt, die in korrespondierende Ausnehmungen der Kissen 64 ragen und diese dadurch sowohl in Umfangsrichtung als auch in Radialrichtung festhalten. Die Kissen 64 können hinsichtlich der Dichte ihres Materials so gestaltet sein, daß sie nennenswerte Abstandsänderungen benachbarter Abstandhalter 62 erlauben, so daß dem Schlauch seine erforderliche Beweglichkeit bleibt.

Fig. 11 zeigt eine Ausführungsform ähnlich Fig. 10 mit einem Schlauch 66 und in dessen Wellentälern eingesetzten Abstandhaltern 67 in Form von Ringen oder Ringsegmenten, wobei in jeden zweiten Ring ein beidseits vorstehendes Rohrstück 68 beispielsweise aus Kunststoff eingesetzt ist, in das von beiden Seiten praktisch spielfrei Stifte 69 eintauchen, die von den übrigen Abstandhaltern 67 aufgenommen sind. Durch die so gebildeten Zylinder-Kolben-Einheiten sind benachbarte Abstandhalter 67 nicht nur durch Reibschluß zwischen den Teilen 68 und 69 gedämpft gegeneinander beweglich, sondern außerdem durch die sich zwischen den Teilen 68 und 69 einstellende pneumatische Bewegungsbremse.

Die Zylinder-Kolben-Einheiten 68, 69 sind wiederum gegenüber dem Schlauch 66 berührungsfrei und können bezüglich jedes Abstandhalters 67 zu mehreren zweckmäßig symmetrisch über den Umfang verteilt angeordnet sein.

Auch für die Fig. 10 und 11 gilt, daß die nicht dargestellten Seile außerhalb des Schlauches 61 bzw. 66 vor und hinter der Linie 63 bzw. 70 liegen.

Schließlich sei noch eine im einzelnen nicht dargestellte Bauform erläutert, wozu beispielhalber auf Fig. 3 oder Fig. 4 Bezug genommen wird. Denkt man sich dort die Fahnen 19 bzw. 23 fort so, daß die Abstandhalter 16 bzw. 22 nur als umlaufende, rundum den Schlauch radial überragende Ringe oder Ringsegmente übrig bleiben, so kann deren gegenseitige Beweglichkeit außerhalb der neutralen Biegeebene auch dadurch gedämpft werden, daß die Abstandhalter außen mit einer Ummantelung aus einem Gestricke, Geflecht, einer kreuzweise gewickelten Bandagierung etc. versehen werden, gegenüber der sich die einzelnen Abstandhalter nur reibend verschieben können, wodurch eine Dämpfung ihrer gegenseitigen Beweglichkeit gegeben ist. In der geschilderten Form ist die Ummantelung ohne Berührung mit dem jeweiligen Schlauch, so daß die Freiheit des Schlauches von tribologischen Belastungen erhalten bleibt.

Legt man eine solche Ummantelung außerdem an den Anschlußstücken des Schlauches fest, so vermag sie außerdem zumindest vorübergehen Axialkräfte abzustützen, die sich ergeben können, wenn zumindest eines der den Schlauch begleitenden Seile bricht bzw. reißt. Auf diese Weise stellt die Ummantelung für einen solchen Fall eine Absicherung gegen ein anschließendes Reißen des Schlauches und die damit einhergehende Unfallgefahr dar.

Anhand der Fig. 3 bis 11 ist die neue Gestaltung lediglich an Schläuchen mit außerhalb angeordneten Seilen und Abstandhaltern erläutert. Die geschilderten Maßnahmen lassen sich jedoch unter konstruktiver Anpassung ohne weiteres ebenso leicht auf Schläuche mit innerer Abstützung übertragen, wie sie grundsätzlich anhand der Fig. 2 angesprochen wurden. Bezogen auf das Beispiel gemäß Fig. 2 wäre es je nach Konstruktion ggf. lediglich erforderlich, die Abstandhalter 13 in Radialrichtung nach innen breiter auszuführen, damit die Dämpfungsglieder wieder gegenüber dem Schlauch berührungsfrei angeordnet werden können.

**Patentansprüche**

1. Biegbarer Schlauch mit zueinander parallelen, ringförmigen Wellen, endständigen Anschlußteilen und diese gegen axiale Abstandsänderung haltenden, mit den Anschlußteilen in Zug- und/oder Druckrichtung fest verbundenen Längsstützmitteln in Form wenigstens eines flexiblen, sich im wesentlichen parallel zum Schlauch erstreckenden Seiles, wobei die Relativlage zwischen Schlauch und Seil durch das Seil erfassende, in Abständen über die Schlauchlänge verteilt angeordnete Abstandhalter gegeben und der Schlauch in Radialrichtung durch das Seil geführt und abgestützt ist, wobei zwischen zumindest zwei benachbarten Abstandhaltern (16, 22, 27, 38, 45, 53, 62, 67) wenigstens ein bezüglich ihrer gegenseitigen Beweglichkeit wirksames Dämpfungsglied (19, 23, 30, 31, 39, 46, 54 bis 60, 64, 68, 69) außerhalb der neutralen Biegeebene des Schlauches (15, 21, 26, 37, 44, 51, 61, 66) angeordnet ist.

2. Schlauch nach Anspruch 1, dadurch gekennzeichnet, daß bei mehreren zwischen zwei benachbarten Abstandhaltern angeordneten Dämpfungsgliedern diese symmetrisch über den Schlauchumfang verteilt sind.

3. Schlauch nach Anspruch 1, dadurch gekennzeichnet, daß das Dämpfungsglied (19, 23, 30, 31, 39, 46, 54 bis 60) eine an einem Abstandhalter (16, 22, 27, 38, 45, 53, 62, 67) gebildete, mit dem benachbarten Abstandhalter wenigstens mittelbar in Berührung stehende Reibfläche ist.

4. Schlauch nach Anspruch 3, dadurch gekennzeichnet, daß bei Abstandhaltern in Form von in die Schlauchwellen eingesetzten oder auf diese aufgesetzten Ringen oder Ringsegmenten (16, 22, 27) das Dämpfungsglied als aus dem Ringmaterial geformte, ggf. über den gesamten Schlauchumfang umlaufende, gegenüber dem Schlauch (15, 21, 26) berührungslose und mit dem benachbarten Ring oder Ringsegment in Reibberührung stehende Fahne (19, 23, 30, 31) ausgebildet ist.

5. Schlauch nach Anspruch 4, dadurch gekennzeichnet, daß die sich im wesentlichen tangential oder radial zum Schlauch und in gleicher Richtung erstreckenden Fahnen (23, 30, 31) benachbarter Ringe oder Ringsegmente (22, 27) schuppenförmig ineinandergeschachtelt sind.

6. Schlauch nach Anspruch 4, dadurch gekennzeichnet, daß die sich im wesentlichen radial und in gleiche Richtung erstreckenden Fahnen (19) benachbarter Ringe oder Ringsegmente (16) in Längsrichtung des Schlauches alternierend aneinanderliegen.

7. Schlauch nach Anspruch 3, dadurch gekennzeichnet, daß bei Abstandhaltern (38, 45) in Form von in die Schlauchwellen eingesetzten oder auf diese aufgesetzten Ringen oder Ringsegmenten das Dämpfungsglied ein auf das Ringmaterial aufgesetztes (39) oder zwischen Ringmaterial und Schlauch (37, 44) eingesetztes (46) Bauteil mit einer in Axialrichtung des Schlauches weisenden, gegenüber dem Schlauch berührungsfreien, ggf. über den gesamten Schlauchumfang umlaufenden Fahne (40, 41, 47, 48) wenigstens mittelbar mit dem benachbarten Ring oder Ringsegment in Reibberührung steht.

8. Schlauch nach Anspruch 7, dadurch gekennzeichnet, daß das Bauteil (39, 46) nach Art einer Balgwelle ausgebildet und von außen oder von innen auf den Ring bzw. das Ringsgement (38, 45) aufgesetzt ist.

9. Schlauch nach Anspruch 7 oder 8, dadurch gekennzeichnet, daß das Bauteil (39) durch eine Schnappverbindung (42, 43) mit dem Ring oder Ringsegment (38) verrastet ist.

10. Schlauch nach Anspruch 3, dadurch gekennzeichnet, daß bei Abstandhaltern (53) in Form von in die Schlauchwellen eingesetzten oder auf diese aufgesetzten Ringen oder Ringsegmenten in Längsrichtung des Schlauches (51) gesehen jeder zweite Abstandhalter ein Paar von schlauchparallelen und gegenüber dem Schlauch berührungsfreien Blattfedern (54, 55) ggf. lösbar, aber unverlierbar trägt, deren beidseits des Abstandhalters vorstehende Zungen (56 bis 59) ggf. aufeinander zu gebogen sind, daß die anderen Abstandhalter beidseits mit den Blattfedern gepaarte Stege (60) aufweisen und daß die Stegenden in Axialrichtung des Schlauches verschiebbar zwischen das jeweils benachbarte Paar von dabei federnd voneinander entfernten Blattfederzungen ragt.

11. Schlauch nach Anspruch 1, dadurch gekennzeichnet, daß das Dämpfungsglied ein zwischen je zwei benachbarte Abstandhalter (62) gegenüber dem Schlauch (61) berührungsfrei ggf. unter Vorspannung eingesetztes, an beiden Abstandhaltern in Axialrichtung des Schlauches in Anlage befindliches Kissen (64) mit gedämpft federnden Eigenschaften ist und daß das Kissen durch die Abstandhalter in Radial- und Umfangsrichtung des Schlauches gehalten ist.

12. Schlauch nach Anspruch 11, dadurch gekennzeichnet, daß die Halterung durch in die Abstandhalter (62) eingesetzte und in Vertiefungen der Kissen (64) ragende Stifte (65) gegeben ist.

13. Schlauch nach Anspruch 11, dadurch gekennzeichnet, daß die Kissen (64) aus Fasermaterial gepreßt sind.

14. Schlauch nach Anspruch 1, dadurch gekennzeichnet, daß die Kissen (64) aus einem Drahtgestricke oder -geflecht gepreßt sind.

15. Schlauch nach Anspruch 15, dadurch gekennzeichnet, daß das Dämpfungsglied durch ein in einen Abstandhalter (67) gegenüber dem Schlauch (66) berührungsfrei eingesetztes, in Axialrichtung des Schlauches weisendes Rohrstück (68) und einen in dieses praktisch spielfrei ragenden Stift (69) des benachbarten Abstandhalters gebildet ist.

16. Schlauch nach Anspruch 1, dadurch gekennzeichnet, daß das Rohrstück (68) und/oder der Stift (69) aus Kunststoff bestehen.

17. Schlauch nach Anspruch 1, dadurch gekennzeichnet, daß die aus Seil und Abstandhaltern gebildete Stütz- und Führungskonstruktion in gegenüber dem Schlauch berührungsfreier Weise durch ein Geflecht, ein Maschennetz oder eine überkreuz gewickelte Bandage ummantelt ist.

## Claims

1. A flexible hose with mutually parallel annular corrugations, coupling parts with fixed ends and, for retaining the latter against changes in axial spacing, longitudinal support means which are rigidly connected in the direction of extension and/or compression and which are in the form of at least one flexible cable extending externally of and parallel with the hose, wherein the relative position between the hose and the cable is given by spacers distributed at intervals along the length of the hose and encompassing the cable, and the hose is radially guided and supported by the cable, wherein at least one damping member (19, 23, 30, 31, 39, 46, 54 to 60, 64, 68, 69) effective to damp the displaceability of the spacers relative to each other is arranged between at least two adjacent spacers (16, 22, 27, 38, 45, 53, 62, 67) externally of the neutral plane of bending of the hose (15, 21, 26, 37, 44, 51, 61, 66).

2. Hose according to claim 1, characterised in that in the case of several damping members arranged between adjacent pairs of spacers the damping members are distributed symmetrically about the periphery of the hose.

3. Hose according to claim 1, characterised in that the damping member (19, 23, 30, 31, 39, 46, 54 to 60) is a frictional surface formed at one spacer (16, 22, 27, 38, 45, 53, 62, 67) at least directly in contact with the adjacent spacer.

4. Hose according to claim 3, characterised in that in the case of spacers in the form of rings or ring segments (16, 22, 27) set into or on troughs of the hose, the damping member is a lug (19, 23, 30, 31) which is moulded from the material of the ring, optionally extends over the entire circumference of the hose, is out of contact with the hose (15, 21, 26) and is in frictional contact with the neighbouring ring or ring segment.

5. Hose according to claim 4, characterised in that the lugs (23, 30, 31) of adjacent rings or ring segments (22, 27), which extend essentially tangentially or radially to the hose and in the same direction, are telescoped into each other in a scale-like manner.

6. Hose according to claim 4, characterised in that the lugs (19) of neighbouring rings or ring segments (16), which extend essentially radially and in the same direction bear alternatingly against each other in the longitudinal direction of the hose.

7. Hose according to claim 3, characterised in that in the case of spacers (38, 45) in the form of rings or ring segments set into or on troughs of the hose, the damping member is a component which is either set on the ring material (as 39) or inserted (as 46) between the ring material and the hose (37, 44) and which is in at least direct frictional contact with the neighbouring ring or ring segment via a lug (40, 41, 47, 48) that extends in the axial direction of, and out of contact with, the hose, and optionally stands over the whole circumference of the hose.

8. Hose according to claim 7, characterised in that the component (39, 46) is formed in the manner of a corrugated bellows and is set on the ring or ring segment (38, 45) from the outside or the inside.

9. Hose according to claim 7 or 8, characterised in that the component (39) is located on the ring or ring segment (38) by way of a snap connection (42, 43).

10. Hose according to claim 3, characterised in that in the case of spacers (53) in the form of rings or ring segments set into or on troughs of the hose, seen in the longitudinal direction of the hose (51) every second spacer carries, optionally releasably but captively, a pair of leaf springs (54, 55) which are parallel to and out of contact with the hose, and which have projecting tongues (56 to 59) on both sides, optionally bent on each other; in that both sides of the other spacers have webs (60) paired with the leaf springs; and in that the web ends project displaceably in the axial direction of the hose between the leaf spring tongues so as resiliently to separate the latter from each other.

11. Hose according to claim 1, characterised in that the damping member is a gad (64) of damped resilient properties disposed between respective pairs of adjacent spacers (62) contactlessly relative to the hose (61) optionally under pretensioning, bearing in the axial direction of the hose against both spacers; and that the pad is retained in the radial and circumferential direction of the hose by the spacers.

12. Hose according to claim 11, characterised in that the retention is provided by pins (65) set into the spacers and projecting into recesses of the pad (64).

13. Hose according to claim 11, characterised in that the pads (64) are pressed from fibrous material.

14. Hose according to claim 11, characterised in that the pads (64) are pressed from a wire mat or wire braid.

15. Hose according to claim 1, characterised in that the damping member is formed by a tube piece (68) extending in the axial direction of the hose and set in a spacer (67) out of contact with the hose (66) and by a pin (69) of the adjacent spacer projecting practically without play into this tube piece.

16. Hose according to claim 15, characterised in that the tune piece (68) and/or the pin (69) are made of synthetic material.

17. Hose according to claim 1, characterised in that the support and guidance construction formed of cable and spacers is surrounded in a contactless manner relative to the hose by means of a braid, wire mesh or crossed-over tie wire wrapping.

## Revendications

1. Tuyau flexible comportant des cannelures annulaires parallèles, des éléments terminaux de raccordement et des moyens de support longitudinaux, qui retiennent ces éléments de raccordement en empêchant toute modification axiale de leur écartement, sont reliées rigidement à ces éléments de raccordement dans le sens d'une traction ou d'une compression et sont réalisés sous la forme d'au moins un câble flexible sensiblement parallèle au tuyau, et dans lequel la position relative entre le tuyau et le câble est fixée par des entretoises saisissant le câble et réparties uniformément par intervalles sur la longueur du tuyau, et ce dernier est guidé et soutenu dans la direction radiale par le câble, et dans lequel entre au moins deux entretoises voisines (16, 22, 27, 38, 45, 53, 62, 67) est disposé au moins un élément d'amortissement (19, 23, 30, 31, 39, 46, 54 à 60, 64, 68, 69), actif en liaison avec la mobilité réciproque de ces entretoises, à l'extérieur du plan neutre de flexion du tuyau (15, 21, 26, 37, 44, 51, 61, 66).

2. Tuyau selon la revendication 1, caractérisé en ce que, dans le cas où plusieurs éléments d'amortissement sont disposés entre deux entretoises voisines, ces éléments d'amortissement sont répartis d'une manière symétrique sur la périphérie du tuyau.

3. Tuyau selon la revendication 1, caractérisé en ce que le circuit d'amortissement (19, 23, 30, 31, 39, 46, 54 à 60) est une surface de frottement formée sur une entretoise (16, 22, 27, 38, 45, 53, 62, 67) et placée au moins directement en contact avec l'entretoise voisine.

4. Tuyau selon la revendication 3, caractérisé en ce que, dans le cas d'entretoises possédant la forme d'anneaux de segments annulaires (16, 22, 27) insérés dans ou emmanchés sur les cannelures du tuyau, l'élément d'amortissement est réalisé sous la forme d'une languette (19, 23, 30, 31), qui est formée avec le matériau de l'anneau, s'étend éventuellement sur toute la périphérie du tuyau, n'est pas en contact avec le tuyau (15, 21, 26) et est en contact avec frottement avec l'anneau ou le segment annulaire voisin.

5. Tuyau selon la revendication 4, caractérisé en ce que les languettes (23, 30, 31), qui s'étendent essentiellement tangentiellement ou radialement par rapport au tuyau et dans la même direction, d'anneaux ou de segments annulaires voisins (22, 27), sont imbriquées les unes dans les autres à la manière de tuiles.

6. Tuyau selon la revendication 4, caractérisé en ce que les languettes (19), qui s'étendent essentiellement radialement et dans la même direction, d'anneaux ou de segments annulaires voisins (16) sont juxtaposées d'une manière alternée dans la direction longitudinale du tuyau.

7. Tuyau selon la revendication 3, caractérisé en ce que dans le cas d'entretoises (38, 45) réalisées sous la forme d'anneaux ou de segments annulaires insérés entre ou emmanchés sur les cannelures de tuyaux, l'élément d'amortissement est un composant (39) emmanché sur le matériau des anneaux ou (46) inséré entre le matériau des anneaux et le tuyau (37, 44), et dont une languette (40, 41, 47, 48), dirigée dans la direction axiale du tuyau, n'a aucun contact avec ce dernier, s'étend éventuellement sur tout le pourtour du tuyau et est en contact par frottement au moins directement avec l'anneau ou le segment annulaire voisin.

8. Tuyau selon la revendication 7, caractérisé en ce que le composant (39, 46) est réalisé sous la forme d'un soufflet et est apposé, de l'extérieur ou de l'intérieur, sur l'anneau ou le segment annulaire (38, 45).

9. Tuyau selon la revendication 7 ou 8, caractérisé en ce que le composant (39) est encliqueté au moyen d'une liaison par encliquetage (42, 43) sur l'anneau ou le segment annulaire (38).

10. Tuyau selon la revendication 3, caractérisé en ce que, dans le cas d'entretoises (53) se présentant sous la forme d'anneaux ou de segments annulaires insérés dans ou emmanchés sur les cannelures du tuyau, une entretoise sur deux, lorsqu'on regarde dans la direction longitudinale du tuyau (51), porte éventuellement d'une manière amovible, mais imperdable, un couple de ressorts en forme de lames (54, 55) qui sont parallèles au tuyau et n'ont aucun contact avec ce dernier et dont les languettes (56 à 59), qui font saillie des deux côtés de l'entretoise, sont éventuellement recourbées les unes vers les autres, que les autres entretoises possèdent des barrettes (60) accouplées des deux côtés aux ressorts en forme de lames et que les extrémités des barrettes pénètrent, de manière à pouvoir être déplacées dans la direction axiale du tuyau, entre les languettes du couple respectivement voisin de languettes, écartées élastiquement l'une de l'autre, des ressorts en forme de lames.

11. Tuyau selon la revendication 1, caractérisé en ce que l'élément d'amortissement est un coussin (64), qui est inséré sans contact avec le tuyau (61) et éventuellement sous précontrainte entre deux entretoises voisines respectives (62), s'applique contre les deux entretoises dans la direction axiale du tuyau et possède des caractéristiques d'élasticité atténuées et que le coussin est retenu par les entretoises dans la direction radiale et dans la direction circonférentielle du tuyau.

12. Tuyau selon la revendication 11, caractérisé en ce que le support est déterminé par des tiges (65) insérées dans les entretoises (62) et pénétrant dans des renfoncements des coussins (64).

13. Tuyau selon la revendication 11, caractérisé en ce que les coussins (64) sont formés par un matériau formé de fibres, pressé.

14. Tuyau selon la revendication 11, caractérisé en ce que les coussins (64) sont formés d'un tricot ou d'un treillis métallique.

15. Tuyau selon la revendication 1, caractérisé en ce que l'élément d'amortissement est formé par une pièce tubulaire (68), qui est insérée dans une entretoise (67) sans être en contact avec le tuyau (66) et dirigée dans la direction axiale du tuyau, et par une tige (69), qui pénètre pratiquement sans jeu dans cette pièce tubulaire, de l'entretoise voisine.

16. Tuyau selon la revendication 15, caractérisé en ce que l'élément tubulaire (68) et/ou la tige (69) sont réalisés en matière plastique.

17. Tuyau selon la revendication 1, caractérisé en ce que le dispositif de support et de guidage formé par un câble et des entretoises est enveloppé par un treillis, un réseau maillé ou un bandage bobiné en croix, sans contact avec le tuyau.

Fig. 1

Fig. 2

Fig. 3

Fig. 4

Fig. 5

Fig. 6

Fig. 7

Fig. 8

Fig. 9

Fig . 10

Fig . 11